# EUROPÄISCHE PATENTSCHRIFT

(11) **EP 2 373 467 B1**
(45) Veröffentlichungstag und Bekanntmachung des Hinweises auf die Patenterteilung: **16.01.2013**
(21) Anmeldenummer: 09801911.0
(22) Anmeldetag: 29.12.2009
(51) Int. Cl.: B28B 5/02, B65G 15/42, B28B 7/06

(54) **VORRICHTUNG ZUM HERSTELLEN VON BETONTRÄGERN, INSBESONDERE DECKENTRÄGERN**
APPARATUS FOR PRODUCING CONCRETE BEAMS, IN PARTICULAR CEILING BEAMS
DISPOSITIF POUR FABRIQUER DES SUPPORTS EN BÉTON, NOTAMMENT DES SUPPORTS DE PLAFOND

(30) Priorität: 07.01.2009 AT 152009
(43) Veröffentlichungstag der Anmeldung: 12.10.2011
(73) Patentinhaber: Schlackl, Franz, 4730 Waizenkirchen (AT)
(72) Erfinder: Schlackl, Franz, 4730 Waizenkirchen (AT)
(74) Vertreter: Hübscher, Helmut
(86) Internationale Anmeldenummer: PCT/AT2009/000499
(87) Internationale Veröffentlichungsnummer: WO 2010/078608

(56) Entgegenhaltungen:
- WO-A1-97/18070
- DE-B- 1 182 143

## Beschreibung

### Technisches Gebiet

Die Erfindung bezieht sich auf eine Vorrichtung zum Herstellen von Betonträgern, insbesondere Deckenträgern, mit einem Schalungstisch und mit auf dem Schalungstisch mit seitlichem Abstand voneinander nebeneinandergereihten Schalungsprofilen, die zwischen sich Formräume zum Gießen von Betonträgersträngen freilassen, wobei der Schalungstisch ein ihn der Länge nach umschließendes, an den Tischenden um tischparallele Umlenkrollen geführtes Förderband aufweist, das die in Förderrichtung verlaufenden Schalungsprofile aus Kunststoff trägt.

### Stand der Technik

Um Betonträger für das Baugewerbe wirtschaftlich herstellen zu können, ist es unter anderem bekannt (DE 100 38 757 A1), einen Schalungstisch einzusetzen und auf diesem Schalungstisch mit Abstand nebeneinander Schalungsprofile anzuordnen, zwischen denen sich Formräume zum Einbringen einer Bewehrung und zum anschließenden Gießen der Betonträger ergeben. Die Betonträger verbleiben während ihrer Aushärtung auf dem Schalungstisch und werden durch Abnahme der Schalungsprofile entformt. Zur einfacheren Handhabung der Schalungsprofile mit Hilfe eines Greifkopfes können die Schalungsprofile mit dem Schalungstisch in vorgegebenen Lagen durch Permanentmagneten lösar verbunden werden. Nachteilig ist allerdings der zur Handhabung der Schaungsprofile erforderliche Greifkopf und der Umstand, dass die Schalungsprofile vor jeder Trägerfertigung neu gesetzt werden müssen.

Darüber hinaus ist es bekannt (WO 97/18070 A1), den Schalungstisch mit einem ihn der Länge nach umschließenden, an den Tischenden um tischparallele Umlenkrollen geführten Förderband auszubilden, das die in Förderrichtung verlaufenden Schalungsprofile aus Kunststoff trägt. Diese als vom Förderband aufragende Stege ausgebildeten Schalungsprofile müssen eine ausreichende Elastizität aufweisen, um die beidseitigen Umlenkrollen am Ende des Förderbands umgelenkt werden zu können und eine Entformung zu ermöglichen. Die Stege können sich auch nur über angenähert die Hälfte der Umfangslänge des Förderbands erstrecken, sodass ein etwa gleichlanger Abschnitt des Förderbands als Flachband ausgebildet ist, das beispielsweise für die Herstellung anderer Betonträger eingesetzt werden kann. Nachteilig ist jedoch, dass die elastischen Stege zwischen den Formräumen zum Gießen von Betonsträngen eine erhebliche Beschränkung in der Querschnittsgestaltung der Betonträgerstränge darstellen und zusätzlich im Bereich der Randstege die Gefahr mit sich bringen, dass das Ausgießen der äußeren Formräume zu einer elastischen Verformung der Randstege führt.

### Darstellung der Erfindung

Der Erfindung liegt somit die Aufgabe zugrunde, eine Vorrichtung der eingangs geschilderten Art zum Herstellen von Betonträgern, insbesondere Deckenträgern, so auszugestalten, dass nicht nur ein Greifkopf für die Handhabung der Schalungsprofile entbehrlich wird, sondern auch eine weitgehend freie Querschnittsgestaltung für die Betonträger gewährleistet werden kann, ohne auf eine einfache Entformung der Betonträger verzichten zu müssen.

Die Erfindung löst die gestellte Aufgabe dadurch, dass die Schalungsprofile Hohlkammerprofile bilden, deren die Hohlkammern begrenzende Seitenwände gegen die Hohlkammern elastisch einwölbbar sind.

Aufgrund der Ausbildung der Schalungsprofile als Hohlkammerprofile können die mit unterschiedlichem Abstand parallel zum Förderband verlaufenden Profilwände während der Umlenkführung um die Umlenkrollen zum Längenausgleich der Höhe nach zusammengedrückt werden, und zwar unter gleichzeitiger Einwölbung der die Hohlkammern begrenzenden Seitenwände gegen die Hohlkammern hin. Dieses Einwölben der Seitenflächen ist mit einem Lösen von den anliegenden Betonträgersträngen verbunden, die somit gegenüber den umgelenkten Schalungsprofilen in ihrer Längsrichtung vom Schalungstisch gefördert werden können. Da sich die Formräume zwischen den einzelnen Schalungsprofilen im Allgemeinen nach oben hin erweitern, stellen die diese Formräume ausfüllenden Betonträgerstränge auch keine Hindernisse bezüglich des Zusammendrückens der Schalungsprofile dar, die ja während ihrer Umlenkung von den Betonträgersträngen weg nach unten gegen das Förderband gedrückt werden.

Die zur Umlenkung der Schalungsprofile mit dem Förderband erforderliche Einwölbung der Seitenwände der Hohlkammern darf zu keinem Ausbeulen der durch diese Seitenwände gebildeten Formwände zufolge des hydrostatischen Betondrucks beim Ausgießen der Formräume zwischen den Schalungsprofilen führen. Es ist daher die Biegesteifigkeit, bzw. der Ausbeulwiderstand der die Hohlkammern begrenzenden Seitenwände sorgfältig an die einander an sich widersprechenden Bedingungen hinsichtlich der für die Umlenkung erforderlichen Einwölbung und der für den Formraum notwendigen Formstabilität anzupassen. Da dies insbesondere bei höheren Hohlkammerprofilen nicht ohne weiteres möglich sein wird, können die Hohlkammern zwischen ihren einander gegenüberliegenden Seitenwänden eine Abstützung aufweisen, die den Ausbeulwiderstand der durch die Seitenwände gebildeten Formwände erhöht, die Einwölbung der Seitenwände für die Umlenkung der Schalungsprofile aber nicht verhindert. Zu diesem Zweck kann die Abstützung wenigstens eine die gegenüberliegenden Seitenwände der Hohlkammern miteinander verbindende Stützwand aufweisen, die einem Ausbeulen der Formwand gegen die Hohlkammer hin entgegenwirkt, das Einwölben der Seitenwände aber während der Umlenkung zulässt. Eine solche Stützwand kann die Hohlkammern der Höhe nach unterteilen, sodass sich beidseits der Stützwand einwölbbare Abschnitte der Setenwände ergeben. Das Ausbeulen der durch die Seitenwände der Hohlkammern gebildeten Formwände durch den Betondruck kann aber auch durch zwei einander schneidende, die Hohlkammern diagonal durchsetzende Stützwände erreicht werden, die die Seitenwände der Hohlkammern zusätzlich der Höhe nach abstützen. Besonders günstige Stützbedingungen ergeben sich allerdings, wenn die Abstützung einen mit einem Druckmittel füllbaren Schlauch umfasst, der zum Entformen der ausgehärteten Betonträgerstränge belüftet werden kann und damit seine Stützwirkung für die Umlenkung der Schalungsprofile vollständig verliert.

Das Förderband kann über seine gesamte Umfangslänge mit Schalungsprofilen bestückt sein. Bei einer solchen Ausführungsform kann die Vorrichtung aber nur zur Herstellung von Betonträgersträngen eingesetzt werden. Zur Erweiterung des Einsatzgebietes empfiehlt sich daher eine Vorrichtung, bei der die Schalungsprofile in an sich bekannter Weise lediglich in einem der Tischlänge entsprechenden Längsabschnitt des Förderbandes vorgesehen sind. In diesem Fall kann der Schalungstisch im Bereich des unbesetzten Abschnitts des Förderbandes beispielsweise auch zur Plattenproduktion verwendet werden.

### Kurze Beschreibung der Zeichnung

In der Zeichnung ist der Erfindungsgegenstand beispielsweise dargestellt. Es zeigen
- Fig. 1: eine erfindungsgemäße Vorrichtung zum Herstellen von Betonträgern in einer vereinfachten Seitenansicht ausschnittsweise im Bereich des ablaufseitigen Tischendes,
- Fig. 2: die Vorrichtung nach der Fig. 1 in einem Schnitt nach der Linie II-II der Fig. 1 in einem größeren Maßstab, die
- Fig. 3 bis 5: unterschiedliche Ausführungsformen von Schalungsprofilen mit einer zusätzlichen Abstützung in der Hohlkammer zwischen den einander gegenüberliegenden Seitenwänden, jeweils im Querschnitt, und die
- Fig. 6 und 7: die während ihrer Umlenkung elastisch verformten Schalungsprofile nach den Fig. 2 und 5.

### Weg zur Ausführung der Erfindung

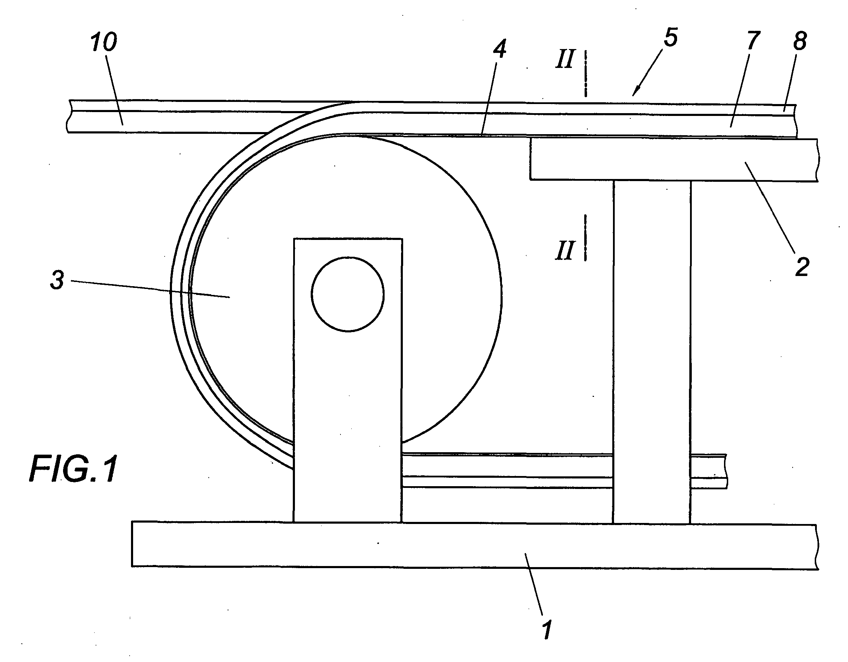

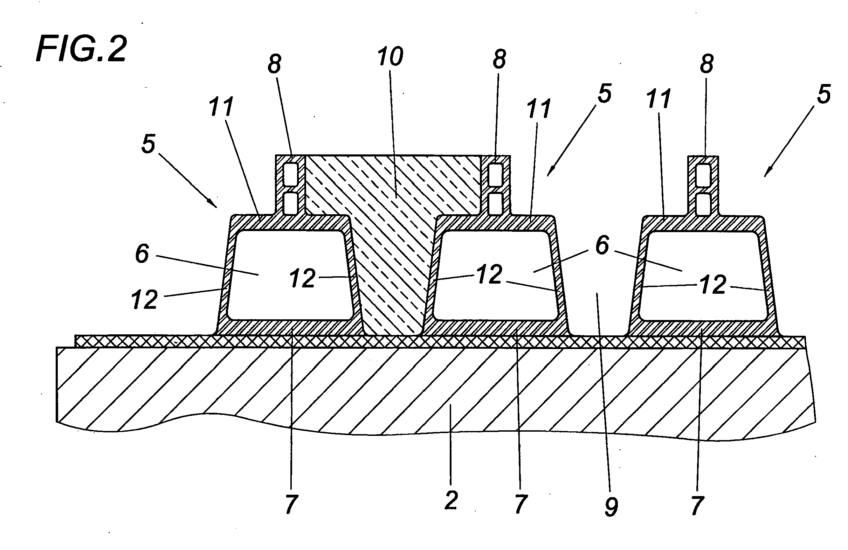

Die dargestellte Vorrichtung weist gemäß den Fig. 1 und 2 ein Gestell 1 mit einem Schalungstisch 2 auf, der an seinen einander in Längsrichtung gegenüberligenden Enden mit je einer Umlenkrolle 3 für ein den Schalungstisch 2 der Länge nach umschließendes Förderband 4 versehen ist. Auf diesem vom Schalungstisch 2 abgestützten Förderband 4 sind mit seitlichem Abstand voneinander Schalungsprofile 5 nebeneinandergereiht, die aus Kunststoff gefertigt sind und Hohlkammern 6 bilden. Diese Schalungsprofile 5 setzen sich gemäß den dargestellten Ausführungsbeispielen aus einem vorzugsweise mit dem Förderband 4 verschweißten Grundkörper 7, dessen Querschnitt im Wesentlichen die Umrissform eines gleichschenkeligen Trapezes aufweist, und aus einem von diesem Grundkörper abstehenden Steg 8 zusammen, sodass sich zwischen den parallelen Schalungsprofilen 5 ein Formraum 9 mit der Querschnittsform der herzustellenden Betonträgerstränge 10 ergibt, wie er in der Fig. 2 zwischen den beiden randseitigen Schalungsprofilen angedeutet ist, allerdings ohne die übliche Bewehrung. Da der Schalungstisch 2 eine Länge aufweisen kann, die die Länge üblicher Betonträger um ein Vielfaches übersteigt, können zwischen den Schalungsprofilen 5 Betonträgerstränge 10 gegossen werden, die erst nachträglich in einzelne Betonträger unterteilt werden.

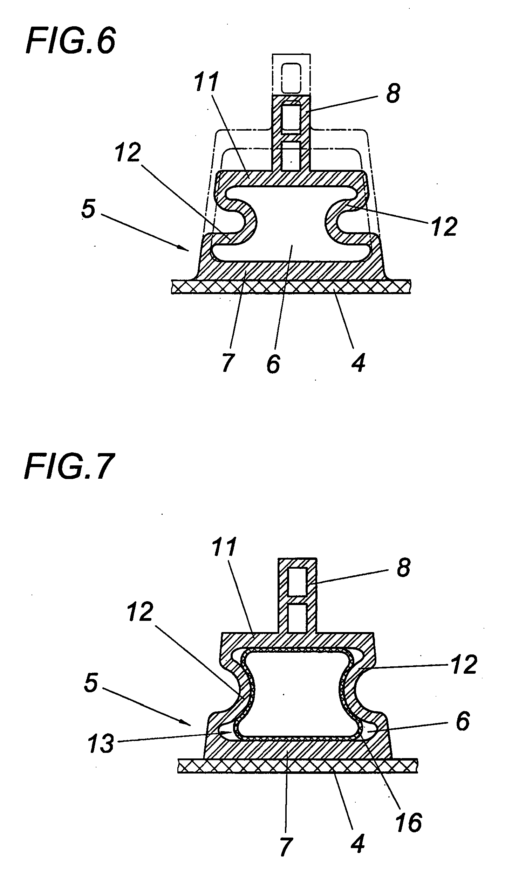

Da z. B. die vom Förderband 4 abgekehrte, zum Förderband 4 parallele Wand 11 des Grundkörpers 7 während der Umlenkung der Schalungsprofile 5 um die Umlenkrolle 3 entlang eines längeren Weges als das Förderband geführt wird, muss für einen zum Umlenken der Schalungsprofile 5 ausreichenden Längenausgleich der mit unterschiedlichem Abstand zum Förderband 4 verlaufenden Profilwände gesorgt werden, indem der radiale Abstand zwischen dem Förderband 4 und der Wand 11 des Grundkörpers 7 verkürzt wird. Zu diesem Zweck können die die Hohlkammer 6 des Grundkörpers 7 begrenzenden Seitenwände 12 gegen die Hohlkammer 6 hin eingewölbt werden, wie dies in der Fig. 6 für ein Schalungsprofil 5 gemäß der Fig. 2 gezeigt wird. Durch diese elastische Einwölbung der Seitenwände 12 wird eine Querschnittsverformung der Schalungsprofile 5 zugelassen, die unter Ausnützung der elastischen Dehnungseigenschaften des gewählten Kunststoffes eine Umlenkung der Schalungsprofile 5 um die Umlenkrollen 3 im Bereich der Tischenden ermöglicht.

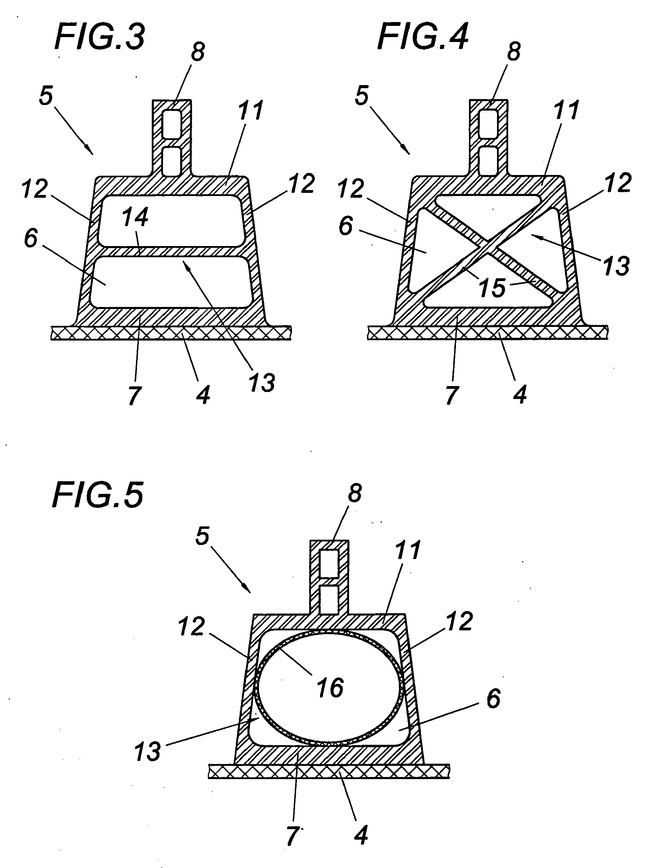

Die für diese Einwölbung der Seitenwände 12 erforderliche Biegeweichheit der Seitenwände 12 birgt allerdings die Gefahr in sich, dass beim Ausgießen der Formräume 9 zwischen den Schalungsprofilen 5 die durch die Seitenwände 12 gebildeten Formwände bezüglich der zu gießenden Betonträgerstränge 10 im Sinne der Einwölbung ausgebeult werden, was zu unterbinden ist. Zu diesem Zweck können die Hohlkammern 6 zwischen ihren einander gegenüberliegenden Seitenwänden 12 eine Abstützung 13 aufweisen. Diese Abstützungen 13 können entsprechend den Fig. 3 bis 5 unterschiedlich ausgebildet sein und beispielsweise aus einer die gegenüberliegenden Seitenwände 12 der Hohlkammern 6 miteinander verbindenden Stützwand 14 bestehen, wie dies in der Fig. 3 dargestellt ist. Bei Einsatz einer solchen Stützwand erfolgt die Einwölbung der Seitenwände 12 in den beiden an die Trennwand 14 anschließenden Abschnitten der Seitenwände 12.

Sind gemäß der Fig. 4 zwei einander schneidende, die Hohlkammern 6 diagonal durchsetzende Stützwände 15 als Abstützung 13 vorgesehen, so wird eine durch den Betondruck bedingte Ausbeulung der durch die Seitenwände 12 gegebenen Formwände durch die Stützung der Seitenwände 12 in Richtung Ihrer Höhe durch die Diagonalwände 15 verhindert.

Um durch die zusätzliche Abstützung der Seitenwände 12 die für die Umlenkung der Schalungsprofile 5 erforderliche Einwölbung der Seitenwände 12 nicht zu erschweren, kann nach der Fig. 5 die Abstützung 13 aus einem mit einem Druckmittel füllbaren Schlauch 16 bestehen, der druckmittelgefüllt eine wirksame Abstützung der Seitenwände 12 bedingt. Wird dieser Schlauch 16 durch eine entsprechende Belüftung entleert, so kann über den Schlauch 16 eine Stützkraft auf die Seitenwände 12 ausgeübt werden, was das Einwölben der Seitenwände vereinfacht, weil die Seitenwände 12 entsprechend biegeweich ausgebildet werden können. Eine solche beginnende Einwölbung der Seitenwände 12 ist in der Fig. 7 dargestellt.

## Patentansprüche

1. Vorrichtung zum Herstellen von Betonträgern, insbesondere Deckenträgern, mit einem Schalungstisch (2) und mit auf dem Schalungstisch (2) mit seitlichem Abstand voneinander nebeneinandergereihten Schalungsprofilen (5), die zwischen sich Formräume (9) zum Gießen von Betonträgersträngen (10) freilassen, wobei der Schalungstisch (2) ein ihn der Länge nach umschließendes, an den Tischenden um tischparallele Umlenkrollen (3) geführtes Förderband (4) aufweist, das die in Förderrichtung verlaufenden Schalungsprofile (5) aus Kunststoff trägt, **dadurch gekennzeichnet, dass** die Schalungsprofile (5) Hohlkammerprofile bilden, deren die Hohlkammern (6) begrenzende Seitenwände (12) gegen die Hohlkammern (6) elastisch einwölbbar sind.

2. Vorrichtung nach Anspruch 1, **dadurch gekennzeichnet, dass** die Hohlkammern (6) zwischen ihren einander gegenüberliegenden Seitenwänden (12) eine Abstützung (13) aufweisen.

3. Vorrichtung nach Anspruch 2, **dadurch gekennzeichnet, dass** die Abstützung (13) wenigstens eine die gegenüberliegenden Seitenwände (12) der Hohlkammern (6) miteinander verbindende Stützwand (14, 15) aufweist.

4. Vorrichtung nach Anspruch 3, **dadurch gekennzeichnet, dass** die Stützwand (14) die Hohlkammern (6) der Höhe nach unterteilt.

5. Vorrichtung nach Anspruch 3, **dadurch gekennzeichnet, dass** zwei einander schneidende, die Hohlkammern (6) diagonal durchsetzende Stützwände (15) vorgesehen sind.

6. Vorrichtung nach Anspruch 2, **dadurch gekennzeichnet, dass** die Abstützung (13) einen mit einem Druckmittel füllbaren Schlauch (16) umfasst.

## Claims

1. Apparatus for producing concrete beams, in particular ceiling beams, having a formwork table (2) and having formwork profiles (5) which are lined up next to each other, are laterally spaced apart from each other on the formwork table (2) and leave free forming chambers (9) between them for the casting of concrete beam strands (10), wherein the formwork table (2) has a conveyor belt (4) surrounding it in the lengthwise direction and guided at the table ends about deflection rollers (3) in parallel with the table, which conveyor belt carries the synthetic material formwork profiles (5) extending in the conveyor direction, **characterised in that** the formwork profiles (5) form hollow chamber profiles, the side walls (12) of which defining the hollow chambers (6) can curve in elastically towards the hollow chambers (6).

2. Apparatus as claimed in claim 1, **characterised in that** the hollow chambers (6) have bracing (13) between their mutually opposing side walls (12).

3. Apparatus as claimed in claim 2, **characterised in that** the bracing (13) has at least one supporting wall (14, 15) connecting the opposing side walls (12) of the hollow chambers (6) to each other.

4. Apparatus as claimed in claim 3, **characterised in that** the supporting wall (14) divides the hollow chambers (6) in terms of height.

5. Apparatus as claimed in claim 3, **characterised in that** two supporting walls (15) are provided which intersect each other and pass through the hollow chambers (6) diagonally.

6. Apparatus as claimed in claim 2, **characterised in that** the bracing (13) includes a hose (16) which can be filled with a pressurising agent.

## Revendications

1. Dispositif pour fabriquer des supports en béton, en particulier des supports de plafond, avec une table de coffrage (2) et des profilés de coffrage (5) alignés les uns à côté des autres avec un espacement latéral sur la table de coffrage (2) qui laissent libres entre eux des espaces de moulage (9) pour couler des boudins de support en béton (10), la table de coffrage (2) présentant une bande transporteuse (4) l'entourant en longueur, guidée aux extrémités de la table autour de rouleaux de déviation (3) parallèles à la table et portant des profilés de coffrage (5) en matière plastique, courant dans le sens de transport, **caractérisé en ce que** les profilés de coffrage (5) forment des profilés à chambres creuses, dont les parois latérales (12) limitant les chambres creuses (6) peuvent être élastiquement courbées contre les chambres creuses (6).

2. Dispositif selon la revendication 1, **caractérisé en ce que** les chambres creuses (6) présentent un appui (13) entre leurs parois latérales (12) se faisant face.

3. Dispositif selon la revendication 2, **caractérisé en ce que** l'appui (13) présente au moins une paroi d'appui (14, 15) reliant ensemble les parois latérales (12) opposées des chambres creuses (6).

4. Dispositif selon la revendication 3, **caractérisé en ce que** la paroi d'appui (14) divise les chambres creuses (6) en hauteur.

5. Dispositif selon la revendication 3, **caractérisé en ce que** sont prévues deux parois d'appui (15) sécantes et pénétrant en diagonal les chambres creuses (6).

6. Dispositif selon la revendication 2, **caractérisé en ce que** l'appui (13) comprend un flexible (16) qui peut être rempli avec un moyen de pression.
